# EUROPEAN PATENT APPLICATION

(11) **EP 4 369 562 A1**
(43) Date of publication of application: **15.05.2024**
(21) Application number: 23768458.4
(22) Date of filing: 15.09.2023
(51) Int. Cl.: H02J 7/00, H02M 3/156, G06F 1/30, H01M 10/44

(54) **ELECTRONIC DEVICE AND BATTERY CONTROL METHOD**

(30) Priority: 20.09.2022 KR 20220118504; 20.10.2022 KR 20220135377
(71) Applicant: Samsung Electronics Co., Ltd., Suwon-si, Gyeonggi-do 16677 (KR)
(72) Inventor: KANG, Sangwoo, Suwon-si, Gyeonggi-do 16677 (KR); LEE, Kyunghwan, Suwon-si, Gyeonggi-do 16677 (KR)
(74) Representative: HGF
(86) International application number: PCT/KR2023/013871
(87) International publication number: WO 2024/063446

(57) **Abstract**

An electronic device according to various embodiments of the disclosure may include a first charging circuit connected to a first node and a second node, a second charging circuit connected to the first node and a third node, a switch connected to the second node and the third node, a battery connected to the second node, a system circuit connected to the third node, and a processor. In addition, various embodiments may be possible.

## Description

### [Technical Field]

Various embodiments of the disclosure relate to an electronic device and a method for controlling a battery.

### [Background Art]

An electronic device, such as a smartphone, a tablet personal computer (PC), a portable multimedia player (PMP), a personal digital assistant (PDA), a laptop PC, or a wearable device (e.g., a wrist watch or a head-mounted display (HMD)) may include a battery to secure portability.

Generally, a battery of an electronic device has a voltage range for an operation of the electronic device. When the voltage level of the battery reaches a voltage level lower than the voltage range for a normal operation, the electronic device blocks power supplied from the battery to protect internal components of the electronic device.

### [Disclosure of Invention]

Even when a voltage level of a battery reaches a voltage level lower than a voltage range for a normal operation and an electronic device blocks power output from the battery, the battery may have available capacity.

An electronic device and a battery control method according to an embodiment of the disclosure may supply power to an electronic device by using a charging circuit even when a battery reaches a low-voltage state.

An electronic device according to the disclosure may include a first charging circuit connected to a first node and a second node, a second charging circuit connected to the first node and a third node, a switch connected to the second node and the third node, a battery connected to the second node, a system circuit connected to the third node, and a processor.

The processor according to the disclosure may perform control to supply power of the battery to the system circuit when a level of a battery voltage output from the battery is higher than a level of a first designated voltage, may control the switch to block electrical connection between the second node and the third node when the level of the battery voltage is lower than the level of the first designated voltage, may control the first charging circuit to boost and output the battery voltage, may control the second charging circuit to enter a buck mode, and may perform control to supply the voltage boosted through the first charging circuit to the system circuit.

A battery control method of an electronic device according to the disclosure may include performing control to supply power of a battery to a system circuit when a level of a battery voltage output from the battery is higher than a level of a first designated voltage, controlling a switch to change electrical connection between the battery and the system circuit when the level of the battery voltage is lower than the level of the first designated voltage, controlling a first charging circuit to boost and output the battery voltage, controlling a second charging circuit to enter a buck mode, and performing control to supply the voltage boosted through the first charging circuit to the system circuit.

An electronic device and a battery control method according to an embodiment of the disclosure may supply power to an electronic device by using a charging circuit for a certain time even when a battery reaches a low-voltage state, thereby improving battery use time.

### [Brief Description of Drawings]

FIG. 1 is a block diagram of an electronic device in a network environment according to various embodiments of the disclosure;
FIG. 2 is a block diagram of an electronic device including a circuit to perform a battery control operation according to an embodiment of the disclosure;
FIG. 3 is a flowchart illustrating a battery control method of an electronic device according to an embodiment of the disclosure;
FIG. 4 illustrates a voltage change of an electronic device according to an embodiment of the disclosure;
FIG. 5A is a graph showing a voltage change at a first node of an electronic device according to an embodiment of the disclosure; and
FIG. 5B is a graph showing changes in battery voltage and output voltage of an electronic device according to an embodiment of the disclosure.

### [Mode for the Invention]

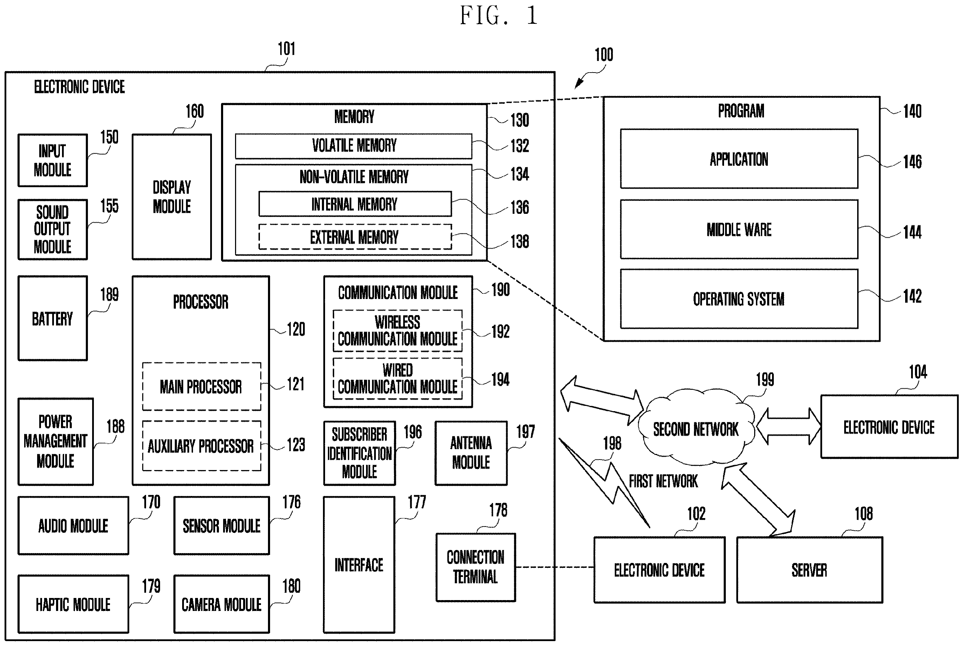

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

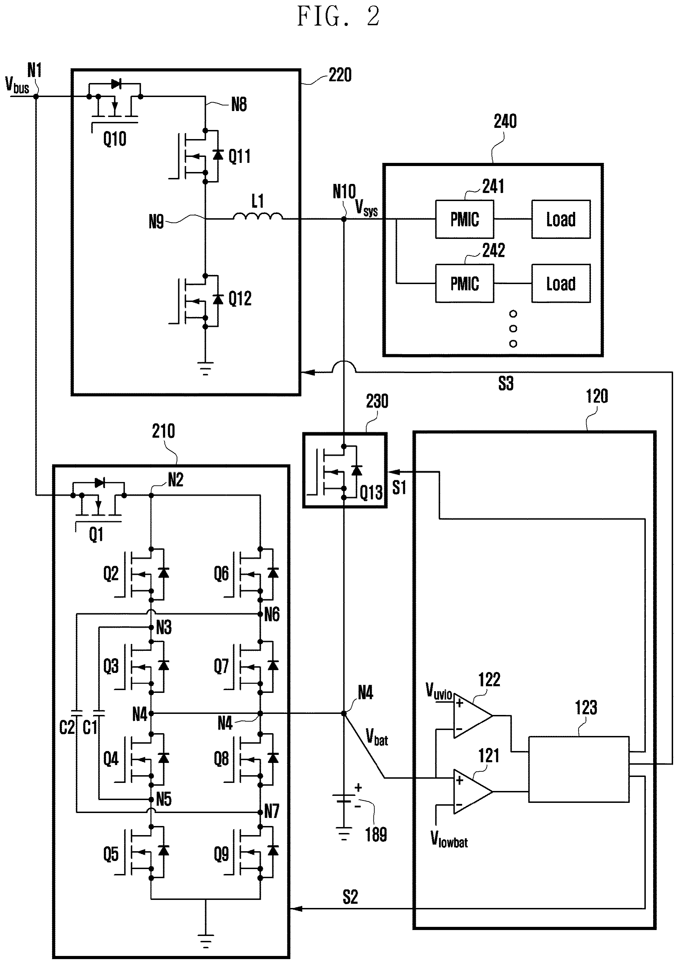

FIG. 2 is a block diagram of an electronic device 101 including a circuit to perform a battery control operation according to an embodiment of the disclosure.

The electronic device 101 according to an embodiment of the disclosure may include a processor 120, a first charging circuit 210, a second charging circuit 220, a switch 230, and a system circuit 240.

The electronic device 101 according to an embodiment of the disclosure may include the first charging circuit 210 connected to a first node N1 and a fourth node N4, the second charging circuit 220 connected to the first node N1 and a tenth node N10, the switch 230 connected to the tenth node N10 and the fourth node N4, the processor 120 connected to the fourth node N4, and the system circuit 240 connected to the tenth node N10.

In an embodiment of the disclosure, the processor 120 is configured with the first charging circuit 210, the second charging circuit 220, and the switch 230, but is not limited to this embodiment, and may be configured in an integrated form of an IC.

In an embodiment of the disclosure, the processor 120 may be a control circuit capable of controlling the first charging circuit 210, the second charging circuit 220, and/or power management integrated circuits (PMICs) 241 and 242. In an embodiment of the disclosure, the processor 120 may include a first amplifier 121, a second amplifier 122, and a control signal circuit 123. The processor 120 is not limited to the foregoing embodiment, but may detect a voltage of the battery 189 to transmit control signals to the first charging circuit 210, the second charging circuit 220, and the switch 230 without including the first amplifier 121, the second amplifier 122, and the control signal circuit 123.

In an embodiment of the disclosure, the first amplifier 121 may compare a battery voltage V_{bat} and a first designated voltage V_{lowbat}. The battery voltage V_{bat} may be a voltage output from the battery 189. The battery voltage V_{bat} may be the same as a voltage of the fourth node N4.

In an embodiment of the disclosure, when a voltage level of the battery voltage V_{bat} is lower than that of the first designated voltage V_{lowbat}, the electronic device 101 may determine that the battery 189 is in a low-voltage state.

In an embodiment of the disclosure, when the voltage level of the battery voltage V_{bat} is lower than that of the first designated voltage V_{lowbat}, the processor 120 may determine that the battery 189 is in the low-voltage state.

In an embodiment of the disclosure, when the voltage level of the battery voltage V_{bat} is lower than that of the first designated voltage V_{lowbat}, the processor 120 may transmit, to the switch 230, a first control signal S1 to control the switch 230 to block connection between the battery 189 and the system circuit 240.

In an embodiment of the disclosure, when the voltage level of the battery voltage V_{bat} is lower than that of the first designated voltage V_{lowbat}, the processor 120 may transmit, to the first charging circuit 210, a second control signal S2 to control the first charging circuit 210 to change or increase the voltage or the voltage level of the battery 189.

In an embodiment of the disclosure, when the voltage level of the battery voltage V_{bat} is lower than that of the first designated voltage V_{lowbat}, the processor 120 may transmit, to the second charging circuit 220, a third control signal S3 to control an output voltage of the second charging circuit 220 to be output with a designated voltage level. The processor 120 may control a buck-mode operation of the second charging circuit 220, based on the third control signal S3.

In an embodiment of the disclosure, when the voltage level of the battery voltage V_{bat} is lower than that of the first designated voltage V_{lowbat}, the control signal circuit 123 may determine that the battery 189 is in the low-voltage state.

In an embodiment of the disclosure, when the voltage level of the battery voltage V_{bat} is lower than that of the first designated voltage V_{lowbat}, the control signal circuit 123 may output the first control signal S1 to control the switch 230 to block the connection between the battery 189 and the system circuit 240.

In an embodiment of the disclosure, when the voltage level of the battery voltage V_{bat} is lower than that of the first designated voltage V_{lowbat}, the control signal circuit 123 may output the second control signal S2 to control the first charging circuit 210 to change or increase the voltage or the voltage level of the battery 189.

In an embodiment of the disclosure, when the voltage level of the battery voltage V_{bat} is higher than that of the first designated voltage V_{lowbat}, the processor 120 may determine that the voltage of the battery 189 is in a normal voltage range.

In an embodiment of the disclosure, when the voltage level of the battery voltage V_{bat} is higher than that of the first designated voltage V_{lowbat}, the processor 120 may transmit, to the switch 230, a first control signal S 1 to control the switch 230 to connect the battery 189 and the system circuit 240 (and, in other words, connect node N10 to node N4, such that the battery voltage Vbat is substantially applied to node N10).

In an embodiment of the disclosure, when the voltage level of the battery voltage V_{bat} is higher than that of the first designated voltage V_{lowbat}, the electronic device 101 may control the processor 120 to supply a voltage to the system circuit 240 by using the battery voltage V_{bat} corresponding to the fourth node N4. The battery voltage V_{bat} and an output voltage V_{sys} may be substantially the same.

In an embodiment of the disclosure, the second amplifier 122 may compare the battery voltage V_{bat} and a second designated voltage Vᵤᵥₗₒ.

In an embodiment of the disclosure, the voltage level of the first designated voltage V_{lowbat} may be higher than that of the second designated voltage Vᵤᵥₗₒ. For example, the voltage level of the first designated voltage V_{lowbat} may be 3.35 V to 3.4 V, and the second designated voltage Vᵤᵥₗₒ may be 2.7 V. However, the disclosure is not limited to the foregoing example.

In an embodiment of the disclosure, the second designated voltage Vᵤᵥₗₒ is a reference voltage for an undervoltage lockout, and the electronic device 101 may turn off power of the electronic device 101 when the voltage of the battery 189 is equal to, or lower than, the second designated voltage Vᵤᵥₗₒ.

In an embodiment of the disclosure, when the voltage level of the battery voltage V_{bat} is lower than that of the second designated voltage Vᵤᵥₗₒ, the processor 120 may control a thirteenth switch element Q13 to be turned on. When an input voltage V_{bus} is supplied to the first node N1, the battery 189 may be charged by using the first charging circuit 210 or the second charging circuit 220.

In an embodiment of the disclosure, when the voltage level of the battery voltage V_{bat} is lower than that of the second designated voltage Vᵤᵥₗₒ, the processor 120 may perform an operation of protecting the battery 189. In an embodiment of the disclosure, when the voltage level of the battery voltage V_{bat} is lower than that of the second designated voltage Vᵤᵥₗₒ, the processor 120 may control the first charging circuit 210 to stop an operation of boosting a voltage. In an embodiment of the disclosure, when the voltage level of the battery voltage V_{bat} is lower than that of the second designated voltage Vᵤᵥₗₒ, the processor 120 may control the switch 230 to electrically connect the second charging circuit 220 and the battery 189. In an embodiment of the disclosure, when the voltage level of the battery voltage V_{bat} is lower than that of the second designated voltage Vᵤᵥₗₒ, the processor 120 may perform control so that the battery 189 may be charged by using the second charging circuit 220.

In an embodiment of the disclosure, the first charging circuit 210 may include a plurality of switch elements Q1, Q2, Q3, Q4, Q5, Q6, Q6, Q8, and Q9 and a plurality of capacitors C1 and C2.

In an embodiment of the disclosure, the first charging circuit 210 may not only generate a boosted input voltage from the input voltage V_{bus} and supply the boosted input voltage to the battery 189 (at node N4), but may also generate a boosted battery voltage from the voltage level of the battery 189 and output the boosted battery voltage to the first node N1 as the input voltage V_{bus}. Thus, he first charging circuit 210 may operate as not only a voltage boost converter but also a reverse boost converter. The first charging circuit 210 may perform a function of boosting and transmitting power to the battery 189 and a function of boosting and outputting the battery voltage V_{bat}.

The first charging circuit 210 may be configured as an integrated circuit (IC). When external power is supplied to the electronic device 101, power may be supplied to the battery 189 and the system circuit 240 by using the first charging circuit 210 and/or the second charging circuit 220. In an embodiment of the disclosure, (for example when the electronic device is battery powered, not externally powered) the first charging circuit 210 may generate a changed voltage (e.g. a boosted battery voltage) from the voltage of the battery 189, based on the second control signal S2, and may transmit the changed voltage to the second charging circuit 220 (e.g. may supply the boosted battery voltage to the first node N1).

In an embodiment of the disclosure, the first charging circuit 210 may generate an increased voltage (or increased voltage level) from the voltage of the battery 189, based on the second control signal S2, and may transmit the increased voltage to the second charging circuit 220.

In an embodiment of the disclosure, the first charging circuit 210 may generate a doubled voltage from the voltage of the battery 189, based on the second control signal S2, and may transmit the doubled voltage to the second charging circuit 220. Thus, the doubled voltage may be double the battery voltage.

In an embodiment of the disclosure, the second control signal S2 may be a signal to control the first charging circuit 210 to generate an increased voltage (or voltage level) compared with the voltage of the battery 189. In other words, the second control signal may be arranged to control the first charging circuit to generate a boosted voltage from the battery voltage.

In an embodiment of the disclosure, when the level of the battery voltage V_{bat} is higher than the level of the first designated voltage V_{lowbat}, the first charging circuit 210 may not boost the voltage of the battery 189 (i.e. the first charging circuit may not be controlled to generate a boosted voltage from the battery voltage).

In an embodiment of the disclosure, when the level of the battery voltage V_{bat} is higher than the level of the first designated voltage V_{lowbat}, the processor 120 may control the switch 230 to supply the battery voltage V_{bat} output from the battery 189 as the output voltage V_{sys}. In this case, when external power is supplied to the electronic device 101, power may be supplied to the battery 189 and the system circuit 240 by using the first charging circuit 210 and/or the second charging circuit 220.

In an embodiment of the disclosure, when the level of the battery voltage V_{bat} is lower than the level of the second designated voltage Vᵤᵥₗₒ, the first charging circuit 210 may be deactivated under control of the processor 120.

In an embodiment of the disclosure, the first charging circuit 210 may be a converter circuit or a booster circuit.

In an embodiment of the disclosure, the first charging circuit 210 may include a first switch element Q1 connected to (or, in other words, connected or arranged between) the first node N1 and a second node N2, a second switch element Q2 connected to the second node N2 and a third node N3, a third switch element Q3 connected to the third node N3 and the fourth node N4, a fourth switch element Q4 connected to the fourth node N4 and a fifth node N5, a fifth switch element Q5 connected to the fifth node N5 and a ground (or a zero voltage node or rail), a sixth switch element Q6 connected to the second node N2 and a sixth node N6, a seventh switch element Q7 connected to the sixth node N6 and the fourth node N4, an eighth switch element Q8 connected to the fourth node N4 and a seventh node N7, a ninth switch element Q9 connected to the seventh node N7 and the ground, a first capacitor C1 connected to the third node N3 and the fifth node N5, and a second capacitor C2 connected to the sixth node N6 and the seventh node N7. The fourth node N4 may be electrically and/or operatively connected to the battery 189, the switch 230, and/or the processor 120. The first capacitor C 1 and the second capacitor C2 may reduce a ripple of a voltage or current output from the first charging circuit 210. In an embodiment of the disclosure, the second charging circuit 220 may generate a changed voltage from a level of a voltage of the first node N1 (or, in other words, from a voltage supplied to, or provided to, the first node N1), based on a configured voltage Vsysset, and may transmit the changed voltage to the system circuit 240 (e.g. by supplying the changed voltage to the tenth node N10).

In an embodiment of the disclosure, the set voltage Vsysset may be configured based on the second charging circuit 220 and the system circuit 240. The set voltage Vsysset may also be described as a pre-set, predetermined, or desired voltage or range of voltages.

In an embodiment of the disclosure, the second charging circuit 220 and the switch 230 may be configured as a single circuit.

In an embodiment of the disclosure, the second charging circuit 220 may change the voltage level of the voltage output from the first charging circuit 210 to the configured voltage V_{sysset}, based on the third control signal S3, and may transmit the changed voltage to the system circuit 240

In an embodiment of the disclosure, the second charging circuit 220 may reduce the voltage level of the voltage output from the first charging circuit 210 to the configured voltage V_{sysset}, based on the third control signal S3, thereby transmitting the output voltage V_{sys} to the system circuit 240.

In an embodiment of the disclosure, when the level of the battery voltage V_{bat} is lower than the level of the second designated voltage Vᵤᵥₗₒ, the second charging circuit 220 may be deactivated under control of the processor 120. In an embodiment of the disclosure, the second charging circuit 220 may include a tenth switch element Q10 connected to (i.e. between) the first node N1 and an eighth node N8, an eleventh switch element Q11 connected to the eighth node N8 and a ninth nodeM9, a twelfth switch element Q12 connected to the ninth node N9 and the ground (or zero potential node or rail), and an inductor L1 connected to the ninth node N9 and the tenth node N10.

In an embodiment of the disclosure, the second charging circuit 220 may be an interface power management integrated circuit (IF PMIC).

In an embodiment of the disclosure, the second charging circuit 220 may be a buck converter circuit. A buck converter is a DC-to-DC converter which steps down voltage from its input (supply) to its output (load). The second charging circuit 220 may reduce the voltage level of the voltage transmitted through the first node N1, based on the configured voltage Vsysset, thereby transmitting the output voltage V_{sys} to the tenth node N10.

In an embodiment of the disclosure, the switch 230 may block supply of the voltage of the battery 189 to the system circuit 240, based on the first control signal S1.

In an embodiment of the disclosure, the switch 230 may include a thirteenth switch element Q13. The thirteenth switch element Q13 may be connected to the fourth node N4 and the tenth node N10.

In a state in which the first charging circuit 210 is deactivated as the level of the battery voltage V_{bat} is lower than the level of the second designated voltage Vᵤᵥₗₒ, when the switch 230 is turned on according to an operation of the second charging circuit 220, the battery voltage V_{bat} and the output voltage V_{sys} may be substantially the same.

In an embodiment of the disclosure, the system circuit 240 may include at least one power management integrated circuit (PMIC) 241 or 242 and at least one load. The output voltage V_{sys} transmitted through the second charging circuit 220 may be adjusted through the at least one PMIC 241 or 242, and be transmitted to a load connected to the at least one PMIC 241 or 242. The load may include an electronic component, a module, or an integrated circuit (IC) included in the electronic device 101, but is not limited thereto.

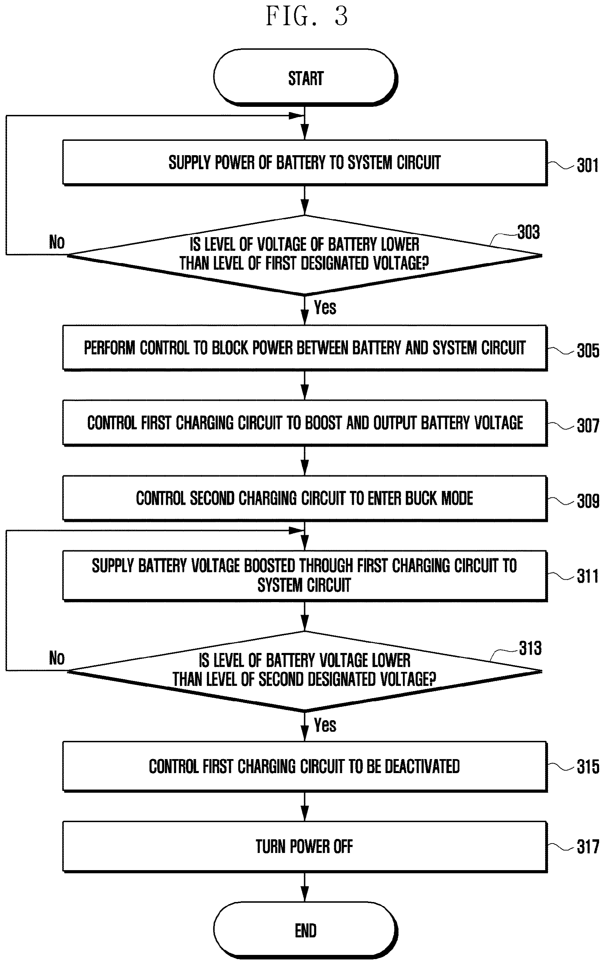

FIG. 3 is a flowchart illustrating a battery control method of an electronic device 101 according to an embodiment of the disclosure.

In an embodiment of the disclosure, in operation 301, the electronic device 101 may supply power of a battery 189 to a system circuit 240 under control of a processor 120.

In an embodiment of the disclosure, in operation 303, the electronic device 101 may determine whether a level of a voltage of the battery 189 is lower than a level of a first designated voltage V_{lowbat} under control of the processor 120.

In an embodiment of the disclosure, when the level of the voltage of the battery 189 is higher (or, in certain embodiments, is equal to or higher) than the level of the first designated voltage V_{lowbat}, the electronic device 101 may proceed to operation 301 from operation 303.

In an embodiment of the disclosure, when the level of the voltage of the battery 189 is lower than the level of the first designated voltage V_{lowbat}, the electronic device 101 may proceed to operation 305 from operation 303.

In an embodiment of the disclosure, in operation 305, the electronic device 101 may perform control to block electrical connection between the battery 189 and the system circuit 240 under control of the processor 120.

Referring to FIG. 2 and FIG. 3, in operation 305, the electronic device 101 may perform control to block power between the battery 189 and the system circuit 240 by transmitting a first control signal S1 to a switch 230 under control of the processor 120. The switch 230 may receive the first control signal S1 to control a thirteenth switch element Q13 to be turned off from the processor 120. The switch 230 may control the thirteenth switch element Q13 to be turned off, based on the first control signal S1, thereby blocking electrical connection between a fourth node N4 and a tenth node N10.

In an embodiment, in operation 305, the electronic device 101 may block the power between the battery 189 and the system circuit 240 by controlling a first charging circuit 210 and/or a second charging circuit 220 to be activated and then transmitting the first control signal S1 to the switch 230 under control of the processor 120. When the first charging circuit 210 and/or the second charging circuit 220 are activated, the first charging circuit 210 may boost a battery voltage V_{bat} to generate a boosted voltage (from the battery voltage) and output the same (i.e. the boosted voltage) as an input voltage V_{bus}, and the second charging circuit 220 may change a level of the input voltage V_{bus} to output the changed voltage as an output voltage Vsys.

In an embodiment of the disclosure, in operation 307, the electronic device 101 may control the first charging circuit 210 to generate a changed voltage (e.g. a boosted voltage) from the battery voltage V_{bat} output from the battery 189 under control of the processor 120.

In an embodiment of the disclosure, in operation 307, the electronic device 101 may control the first charging circuit 210 to "boost" the battery voltage 190 (i.e. generate an increased, or boosted, voltage form the battery voltage) and output the increased (i.e. boosted) voltage as the input voltage Vbus under control of the processor 120.

Referring to FIG. 2 and FIG. 3, in operation 307, the electronic device 101 may control the first charging circuit 210 to generate a boosted voltage from the battery voltage Vbat (e.g., a boosted voltage double the battery voltage) and output the boosted voltage as the input voltage Vbus by transmitting a second control signal S2 to the first charging circuit 210 under control of the processor 120. The first charging circuit 210 may increase the level of the voltage of the battery 189, and may transmit the increased voltage to a first node N1 or the second charging circuit 220.

In an embodiment of the disclosure, in operation 309, the electronic device 101 may control the second charging circuit 220 to enter a buck mode under control of the processor 120. In a buck mode, the second charging circuit may act as a voltage converter that generates an output voltage lower than an input voltage to the second charging circuit.

In an embodiment of the disclosure, in operation 309, the electronic device 101 may control the second charging circuit 220 to generate a reduced voltage from a level of the input voltage V_{bus} output from the first charging circuit 210 under control of the processor 120.

Referring to FIG. 2 and FIG. 3, in operation 309, the electronic device 101 may control the second charging circuit 220 to generate a reduced voltage from a level of a voltage (e.g., the input voltage V_{bus}) output from the first charging circuit 210 under control of the processor 120. The second charging circuit 220 may changethe voltage level of the voltage output from the first charging circuit 210 to a configured voltage V_{sysset}, based on a third control signal S3, and may transmit the changed voltage to the system circuit 240.

In an embodiment of the disclosure, in operation 311, the electronic device 101 may change the voltage of the battery 189 boosted through the first charging circuit 210 to the output voltage V_{syt} based on the configured voltage V_{sysset}, and may supply the changed voltage to the system circuit 240.

In an embodiment of the disclosure, the electronic device 101 may perform operation 305, operation 307, and operation 309 in any order under control of the processor 120.

In an embodiment of the disclosure, the electronic device 101 may simultaneously perform some of operation 305, operation 307, operation and 309 under control of the processor 120.

In an embodiment of the disclosure, in operation 313, the electronic device 101 may determine whether the level of the battery voltage V_{bat} output from the battery 189 is lower than that of a second designated voltage Vᵤᵥₗₒ under control of the processor 120.

In an embodiment of the disclosure, when the level of the voltage (e.g., the battery voltage V_{bat}) of the battery 189 is lower than the level of the second designated voltage Vᵤᵥₗₒ, the electronic device 101 may proceed to operation 315 from operation 313.

In an embodiment of the disclosure, when the level of the voltage (e.g., the battery voltage V_{bat}) of the battery 189 is higher than the level of the second designated voltage Vᵤᵥₗₒ, the electronic device 101 proceeds to operation 311 from operation 313.

In an embodiment of the disclosure, in operation 315, the electronic device 101 may control the first charging circuit 210 to be deactivated under control of the processor 120.

In an embodiment of the disclosure, in operation 315, the electronic device 101 may control the first charging circuit 210 to stop an operation of boosting the battery voltage V_{bat} under control of the processor 120.

In an embodiment of the disclosure, in operation 317, the electronic device 101 may perform control to turn off power of the electronic device 101 under control of the processor 120.

In an embodiment of the disclosure, in operation 317, the electronic device 101 may perform an operation of protecting the battery 189 under control of the processor 120.

In an embodiment of the disclosure, in operation 317, the electronic device 101 may control the switch 230 to electrically connect the second charging circuit 220 and the battery 189 under control of the processor 120.

In an embodiment of the disclosure, in operation 317, the electronic device 101 may enter a mode of protecting the battery 189, and may perform control to enable charging of the battery 189 using the second charging circuit 220 under control of the processor 120.

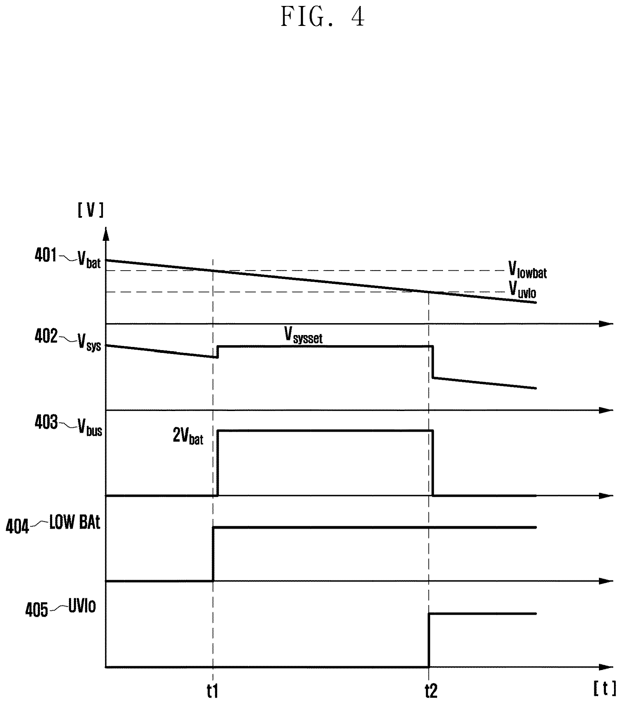

FIG. 4 illustrates a voltage change of an electronic device 101 according to an embodiment of the disclosure.

A graph 401 shows the change in battery voltage V_{bat}, a graph 402 shows an output voltage V_{sys} corresponding to a tenth node N10, and a graph 403 shows an input voltage V_{bus} corresponding to a first node N1.

A graph 404 shows a signal for a processor 120 to identify a low-voltage state of a battery, and a graph 405 shows a signal for the processor 120 to identify an undervoltage lockout state.

Referring to FIG. 2 to FIG. 4, at a first time t1, when the battery voltage V_{bat} is lower than a first designated voltage V_{lowbat}, the processor 120 may transmit a first control signal S1 to a switch 230 to block connection between the battery 189 and a system circuit 240. Here, the processor 120 may transmit a second control signal S2 to a first charging circuit 210, thereby controlling the first charging circuit 210 to boost the battery voltage V_{bat} output from the battery 189. The first charging circuit 210 may generate a boosted voltage from the battery voltage V_{bat} output from the battery 189, and may output the boosted voltage to the first node N1 as the input voltage V_{bus}. The first charging circuit 210 may output a voltage twice the battery voltage V_{bat}. Further, the processor 120 may transmit a third control signal S3 to a second charging circuit 220, thereby controlling the second charging circuit 220 to output the input voltage V_{bus} output from the first charging circuit 210 within a range of a configured voltage V_{sysset}. The second charging circuit 220 may supply the output voltage V_{sys} to the system circuit 240 within the range of the configured voltage V_{sysset}. The electronic device 101 may identify the low-voltage state of the battery under control of the processor 120.

At a second time t2, when the battery voltage V_{bat} is lower than a second designated voltage Vᵤᵥₗₒ, the processor 120 may block an operation of the first charging circuit 210, and may turn off power of the electronic device 101.

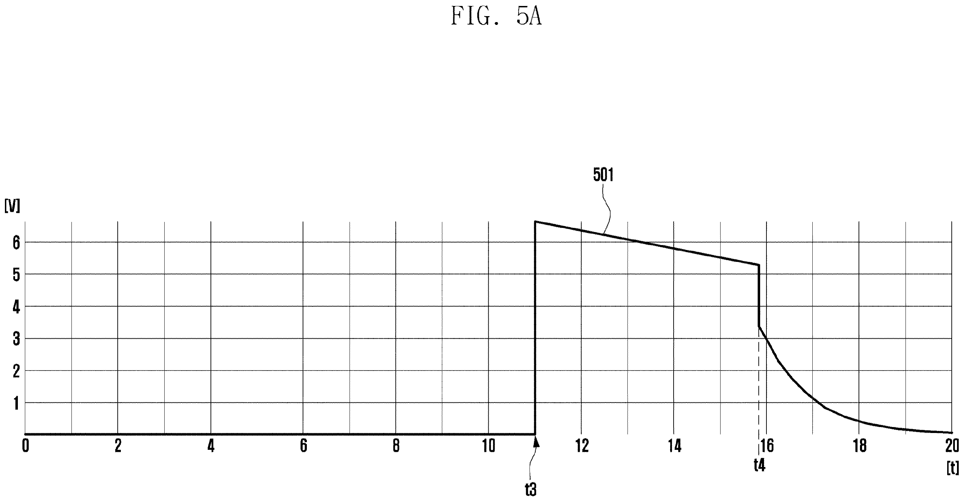

FIG. 5A is a graph showing a voltage change at a first node N1 of an electronic device 101 according to an embodiment of the disclosure.

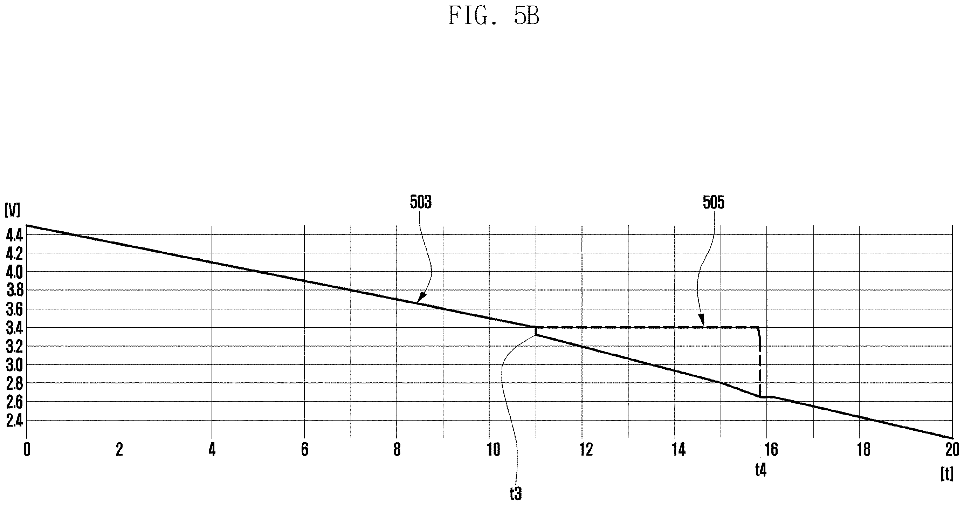

FIG. 5B is a graph showing changes in battery voltage V_{bat} and output voltage V_{sys} of the electronic device 101 according to an embodiment of the disclosure.

Referring to FIG. 5A and FIG. 5B, the battery voltage V_{bat} may decrease over time as shown in a graph 503, and the output voltage V_{sys} may be constantly maintained between a third time t3 and a fourth time t4.

Between the third time t3 and the fourth time t4, when the battery voltage V_{bat} is lower than a first designated voltage V_{lowbat} (e.g., 3.4 V in FIG. 5B), a voltage level of an input voltage V_{bus} to the first node N1 may increase due to a voltage output from a first charging circuit 210 as shown in a graph 501. Between the third time t3 and the fourth time t4, the output voltage V_{sys} may be constantly maintained as shown in a graph 505.

After the fourth time t4, when the battery voltage V_{bat} is lower than a second designated voltage Vᵤᵥₗₒ (e.g., 2.7 V in FIG. 5B), the voltage level of the input voltage V_{bus} may gradually decrease as shown in the graph 501. After the fourth time t4, when a switch 230 is turned on to connect a tenth node N10 and a fourth node N4, the output voltage V_{sys} may become the same as the battery voltage V_{bat}.

In an embodiment of the disclosure, an electronic device 101 may include a first charging circuit 210 connected to a first node (e.g., the first node N1 of FIG. 2) and a second node (e.g., the fourth node N4 of FIG. 2), a second charging circuit 220 connected to the first node (e.g., the first node N1 of FIG. 2) and a third node (e.g., a tenth node N10 of FIG. 2), a switch 230 connected to the second node (e.g., the fourth node N4 of FIG. 2) and the third node (e.g., the tenth node N10 of FIG. 2), a battery 189 connected to the second node (e.g., the fourth node N4 of FIG. 2), a system circuit 240 connected to the third node (e.g., the tenth node N10 of FIG. 2), and a processor 120.

In an embodiment of the disclosure, the processor 120 may perform control to supply power of the battery 189 to the system circuit 240 when a level of a battery voltage V_{bat} output from the battery 189 is higher than a level of a first designated voltage Vlowbat, may control the switch 230 to block electrical connection between the second node (e.g., the fourth node N4 of FIG. 2) and the third node (e.g., the tenth node N10 of FIG. 2) when the level of the battery voltage V_{bat} is lower than the level of the first designated voltage V_{lowbat}, may control the first charging circuit 210 to boost the battery voltage V_{bat} and output the boosted voltage, may control the second charging circuit 220 to enter a buck mode, and may perform control to supply the voltage boosted through the first charging circuit 210 to the system circuit 240.

In an embodiment of the disclosure, the processor 120 may control the first charging circuit 210 to be deactivated when the level of the battery voltage V_{bat} is lower than a level of a second designated voltage Vᵤᵥₗₒ.

In an embodiment of the disclosure, the first designated voltage V_{lowbat} may have a higher voltage level than that of the second designated voltage Vᵤᵥₗₒ.

In an embodiment of the disclosure, the processor 120 may perform control to stop a voltage boost operation of the first charging circuit 210 when the level of the battery voltage V_{bat} is lower than the level of the second designated voltage Vᵤᵥₗₒ.

In an embodiment of the disclosure, the processor 120 may perform control to supply the battery voltage V_{bat} boosted through the first charging circuit 210 to the system circuit 240 when the level of the battery voltage V_{bat} is higher than the level of the second designated voltage Vᵤᵥₗₒ.

In an embodiment of the disclosure, the processor 120 may transmit a first control signal S1 to control the switch 230 to be turned off to the switch 230 when the level of the battery voltage V_{bat} is lower than the level of the first designated voltage Vlowbat.

In an embodiment of the disclosure, the processor 120 may transmit a second control signal S2 to control the first charging circuit to generated a boosted voltage from the battery voltage V_{bat}, and output the boosted voltage as an output voltage of the first charging circuit when the level of the battery voltage V_{bat} is lower than the level of the first designated voltage V_{lowbat}.

In an embodiment of the disclosure, the processor 120 may transmit a third control signal S3 to control a voltage input to the second charging circuit 220 to be reduced to a configured voltage and output to the second charging circuit 220when the level of the battery voltage V_{bat} is lower than the level of the first designated voltage V_{lowbat}.

In an embodiment of the disclosure, the processor 120 may control the first charging circuit to boost the battery voltage V_{bat} and output the boosted voltage.

In an embodiment of the disclosure, the first charging circuit may be an integrated circuit (IC) that performs a function of transmitting external power to the battery 189 and a function of boosting the battery voltage V_{bat} and outputting the boosted voltage.

In an embodiment of the disclosure, a battery 189 control method of an electronic device 101 may include performing control to supply power of a battery 189 to a system circuit 240 when a level of a battery voltage V_{bat} output from the battery is higher than a level of a first designated voltage V_{lowbat}, controlling a switch 230 to change electrical connection between the battery 189 and the system circuit 240 when the level of the battery voltage V_{bat} is lower than the level of the first designated voltage V_{lowbat}, controlling a first charging circuit 210 to boost the battery voltage V_{bat} and output the boosted voltage, controlling a second charging circuit 220 to enter a buck mode, and performing control to supply the voltage boosted through the first charging circuit 210 to the system circuit 240. In other words, when the level of the battery voltage Vbat is lower than the level of the first designated voltage Vlowbat, the first charging circuit 210 may be controlled to generate a boosted voltage from the battery voltage and supply the boosted voltage to the second charging circuit. The second charging circuit may then be controlled to generate a changed voltage from the boosted voltage, and supply the changed voltage to the system circuit. In certain embodiments, the boosted voltage is higher than the battery voltage, and the changed voltage is lower than the boosted voltage (but may be higher than the battery voltage).

In an embodiment of the disclosure, the battery 189 control method of the electronic device 101 may further include controlling the first charging circuit 210 to be deactivated when the level of the battery voltage V_{bat} is lower than a level of a second designated voltage Vᵤᵥₗₒ.

In an embodiment of the disclosure, the battery 189 control method of the electronic device 101 may include performing control to stop a voltage boost operation of the first charging circuit 210 when the level of the battery voltage V_{bat} is lower than the level of the second designated voltage Vᵤᵥₗₒ. Thus, further discharge of the battery may be prevented, once its voltage has dropped below Vuvlo.

In an embodiment of the disclosure, the battery 189 control method of the electronic device 101 may further include performing control to supply the battery voltage V_{bat} boosted through the first charging circuit 210 to the system circuit 240 when the level of the battery voltage V_{bat} is higher than the level of the second designated voltage Vᵤᵥₗₒ. Thus, the battery may be arranged to power the system circuit (e.g. via the first charging circuit in boost mode, and the second charging circuit in buck mode) while the battery voltage is between Vlowbat and Vuvlo.

In an embodiment of the disclosure, the battery 189 control method of the electronic device 101 may include transmitting a first control signal S 1 to control the switch 230 to be turned off when the level of the battery voltage V_{bat} is lower than the level of the first designated voltage V_{lowbat}. While Vbat is above Vlowbat, hower, the switch may be turned on, and the battery output voltage may be supplied directly (i.e. not via the first and second charging circuits) to the system circuit 240.

In an embodiment of the disclosure, the battery 189 control method of the electronic device 101 may include transmitting a second control signal S2 to control the first charging circuit 210 to boost and output the voltage of the battery 189 to the first charging circuit when the level of the battery voltage V_{bat} is lower than the level of the first designated voltage V_{lowbat}.

In an embodiment of the disclosure, the battery 189 control method of the electronic device 101 may include transmitting a third control signal S3 to control a voltage input to the second charging circuit 220 to be reduced to a configured voltage and output to the second charging circuit 220 when the level of the battery voltage V_{bat} is lower than the level of the first designated voltage V_{lowbat}.

In an embodiment of the disclosure, the battery 189 control method of the electronic device 101 may include controlling the first charging circuit to boost and output the battery voltage V_{bat}.

The electronic device according to various embodiments set forth herein may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as " 1 st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first charging circuit connected to a first node and a second node;
a second charging circuit connected to the first node and a third node;
a switch connected to the second node and the third node;
a battery connected to the second node;
a system circuit connected to the third node; and
a processor,
wherein the processor is configured to:
perform control to supply power of the battery to the system circuit in case that a level of a battery voltage output from the battery is equal to or higher than a level of a first designated voltage;
control the switch to block electrical connection between the second node and the third node in case that the level of the battery voltage is lower than the level of the first designated voltage;
control the first charging circuit to boost the battery voltage and output the boosted battery voltage;
control the second charging circuit to enter a buck mode; and
perform control to supply the boosted battery voltage through the first charging circuit to the system circuit.

2. The electronic device of claim 1, wherein the processor is configured to control the first charging circuit to be deactivated in case that the level of the battery voltage is lower than a level of a second designated voltage.

3. The electronic device of claim 2, wherein the first designated voltage has a higher voltage level than that of the second designated voltage.

4. The electronic device of claim 2, wherein the processor is configured to perform control to stop a voltage boost operation of the first charging circuit in case that the level of the battery voltage is lower than the level of the second designated voltage.

5. The electronic device of claim 1, wherein the processor is configured to perform control to supply the boosted battery voltage through the first charging circuit to the system circuit in case that the level of the battery voltage is equal to or higher than the level of the second designated voltage.

6. The electronic device of claim 1, wherein the processor is configured to transmit a first control signal to the switch to turn off the switch in case that the level of the battery voltage is lower than the level of the first designated voltage.

7. The electronic device of claim 1, wherein the processor is configured to transmit a second control signal to control the first charging circuit to boost the battery voltage and output the boosted battery voltage as an output voltage to the first charging circuit in case that the level of the battery voltage is lower than the level of the first designated voltage.

8. The electronic device of claim 1, wherein the processor is configured to transmit a third control signal to control a voltage input to the second charging circuit to be reduced to a configured voltage and output to the second charging circuit in case that the level of the battery voltage is lower than the level of the first designated voltage.

9. A battery control method of an electronic device, the method comprising:
performing control to supply power of a battery to a system circuit in case that a level of a battery voltage output from the battery is equal to or higher than a level of a first designated voltage;
controlling a switch to change electrical connection between the battery and the system circuit in case that the level of the battery voltage is lower than the level of the first designated voltage;
controlling a first charging circuit to boost the battery voltage and output the boosted battery voltage;
controlling a second charging circuit to enter a buck mode; and
performing control to supply the boosted battery voltage through the first charging circuit to the system circuit.

10. The method of claim 9, further comprising controlling the first charging circuit to be deactivated in case that the level of the battery voltage is lower than a level of a second designated voltage.

11. The method of claim 10, wherein the first designated voltage has a higher voltage level than that of the second designated voltage.

12. The method of claim 10, comprising performing control to stop a voltage boost operation of the first charging circuit in case that the level of the battery voltage is lower than the level of the second designated voltage.

13. The method of claim 9, further comprising performing control to supply the boosted battery voltage to the system circuit in case that the level of the battery voltage is equal to or higher than the level of the second designated voltage.

14. The method of claim 9, comprising transmitting a first control signal to the switch to turn off the switch in case that the level of the battery voltage is lower than the level of the first designated voltage.

15. The method of claim 9, comprising:
transmitting a second control signal to control the first charging circuit to boost the battery voltage and output the boosted battery voltage to the first charging circuit in case that the level of the battery voltage is lower than the level of the first designated voltage; and
transmitting a third control signal to control a voltage input to the second charging circuit to be reduced to a configured voltage and output to the second charging circuit in case that the level of the battery voltage is lower than the level of the first designated voltage.
